# EUROPEAN PATENT APPLICATION

(11) **EP 4 790 837 A1**
(43) Date of publication of application: **12.08.2026**
(21) Application number: 25156095.9
(22) Date of filing: 05.02.2025
(51) Int. Cl.: H01R 9/05, H02G 15/188, H01R 4/20

(54) **IMPROVED GROUNDING SYSTEM AND GROUNDING METHOD FOR METAL LAYER SCREENED CABLES**

(71) Applicant: TE Connectivity Solutions GmbH, 8200 Schaffhausen (CH)
(72) Inventor: HARDI, Markus, 85521 Ottobrunn (DE); NAVOOR, Ashwini Alva, 560066 Bangalore (IN); FRIEDRICH, Torsten, 85521 Ottobrunn (DE); SERTIC, Luka, 85521 Ottobrunn (DE); DUPANOVIC, Goran, 85521 Ottobrunn (DE); FADLJEVIC, Romeo, 85521 Ottobrunn (DE)
(74) Representative: Grünecker Patent- und Rechtsanwälte PartG mbB

(57) **Abstract**

The present invention provides grounding systems and methods for grounding a screened cable having a metal layer screen around an insulation sleeve of the cable conductive core. The grounding system comprises a stabilizing structure adapted to be directly mounted on and around an outer surface of the insulation sleeve to separate said insulation sleeve from an inner surface of the metal layer screen. The stabilizer structure allows to separate the metal screen from the cable insulation sleeve, and therefore, prevent a relative displacement among the grounding system parts that may be caused by repeated heating cycles. Thus, an increase of the contact resistance can be avoided as well as a deterioration of the contact plates, an overheating of the metal screen and consequent damage of the cable insulation. The present invention also provides a screened cable comprising the grounding system.

## Description

### TECHNICAL FIELD OF THE INVENTION

The present invention relates to grounding systems and methods for grounding metal layer screened cables, and a screened cable comprising the grounding system.

### BACKGROUND OF THE INVENTION

Screened cables are commonly used in offshore wind plants, offshore substations and solar farms for transporting high electrical currents and connecting high-voltage power circuits. Such screened cables include a screen, also called shield, disposed around a polymer insulation of the cable conductive core. The screen is generally made of an electrically conductive material in a variety of forms, such as copper wires, metal foil, aluminium tape or a conducting polymer, that extends along a longitudinal length of the cable to be connected to earth (or a suitable ground reference) at one or both cable ends. The grounded screen makes then possible to deviate to ground any leakage currents which might pass through the cable polymer insulation, thereby reducing the risk of electric shocks. The grounded screen also prevents the occurrence of corona discharges that could be otherwise generated by high electrostatic fields established around the electrical cable when transporting high currents.

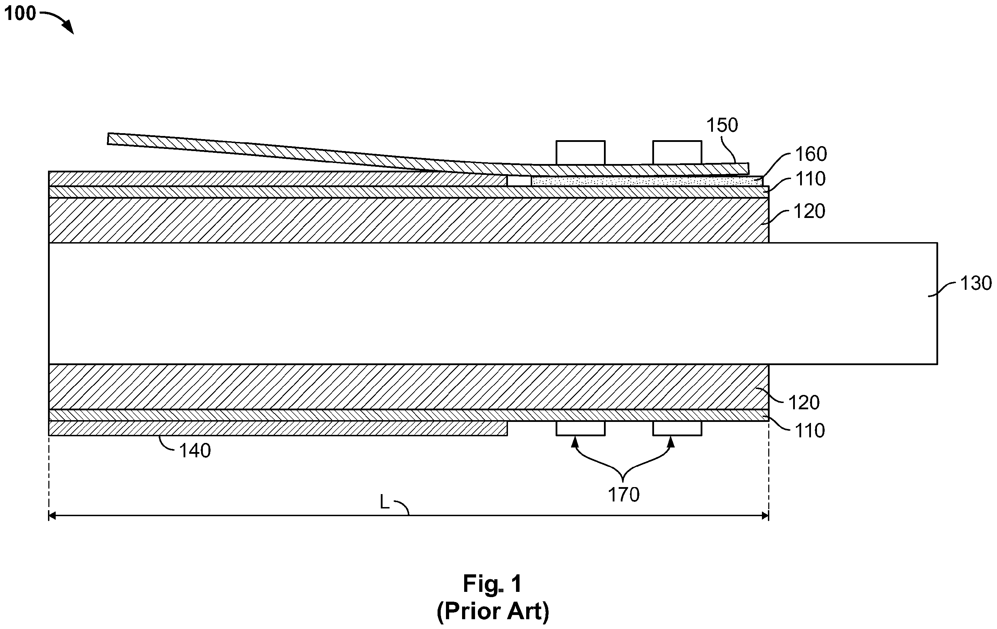

An example of a metal layer screened cable 100 with a conventional grounding design is shown in Fig. 1. The screened cable 100 includes a metal layer screen 110 disposed around the polymer insulation 120 of the cable conductive core 130. The cable over-sheath 140 is shortened at one end of the screened cable 100 for exposing a portion of the metal screen 110 which will be connected to ground via an earth braid 150. The electrical connection between the metal screen 110 and the earth braid 150 is made via a copper contact plate 160 directly installed on a section of the exposed metal screen 110. The earth braid 150 and the copper contact plate 160 are fixed to the metal screen 110 using LIGAREX strips 170. However, since the metal screen 110 is in direct contact with the cable polymer insulation 120, the radial pressure applied by the LIGAREX strips 170 onto the grounding system components is also transmitted to the cable polymer insulation 120. Thus, due to deformable nature of the polymer insulation 120, it is difficult to maintain a stable contact pressure at all times.

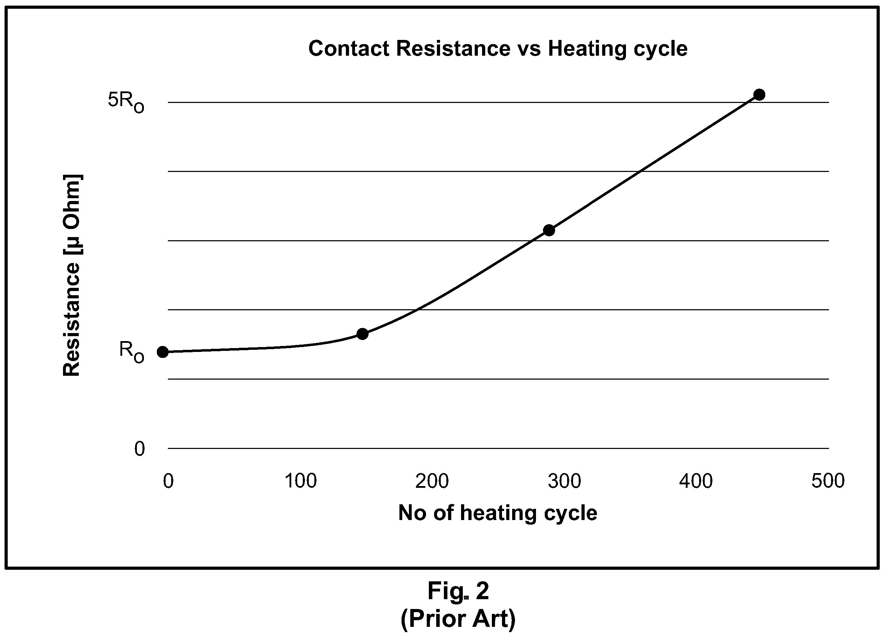

Moreover, in view of the recent demand for electrical cables capable of transporting high currents of up to 250 A, the conventional grounding concept presents additional limitations. For instance, the high currents transported by the screened cable 100 may cause undesirable effects, such as a deterioration of the copper contact plate 160, an overheating of the metal screen 110 and consequent damage of the cable insulation 120. In addition, due to the direct mount of the metal screen 110 onto the cable polymer insulation 120 and the differences in the respective thermal expansion coefficients, the screened cable 100 is prone to relative movements of the contact plate 160 and/or the earth braid 170 with respect to the metal screen 110 under the effect of strong temperature variations. Such relative movements cause an increase of the contact resistance with the increasing number of heating cycles to which the cable 100 will be exposed during its lifetime. This results in further heating of the grounding parts. The plastic deformation of the polymer insulation 120 at high temperature also contributes to reduce the contact pressure, thereby causing further heating at the contact region. All these factors lead to the emergence of a cyclic effect. Fig. 2 illustrates an example of how the contact resistance may increase with the number of heating cycles for a conventional screened cable. As a result, the grounding parts deteriorate with time and the reliability of the grounded screen is significantly reduced. This leads to the need of replacing the screened cables more frequently than desired, which represents an increase in costs in terms of material components, manpower and eventual shut-down of the power facilities.

Thus, there is a need for grounding systems and methods for grounding metal layer screened cables that are capable of offering a reliable grounded screen under repeated heating cycles, without significant damage of the screened cable and its grounding components at transport currents of at least up to 250A, thereby capable of expanding the working life of the screened cable as well as reducing installation and maintenance costs.

### SUMMARY OF THE INVENTION

The present invention has been made in view of the shortcomings and disadvantages of the prior art, and an object thereof is to provide a grounding system for a metal layer screened cable that eliminates or at least reduces deterioration of the screened cable caused by the generation of heat associated with a contact resistance increase with the number of heating cycles to which the screened cable is exposed at high transport currents.

This object is solved by the subject matter of the independent claims. Embodiments of the present invention are subject matter of the dependent claims.

The concept underlying the present invention lies in providing a grounding system having a stabilizing structure, such as a stabilizing tubular element or ring, that separates the polymer insulation of the screened cable from the metal screen at a connection section to which the metal screen will be electrically connected to ground. The stabilizing structure prevents the occurrence of relative displacements between the metal screen and other grounding parts associated with the differences in the thermal expansion of the polymer insulation and the metal screen under a heating cycle, thereby resulting in a more stable contact. In addition, the stabilizing structure is made from material(s) that confer sufficient rigidity for the stabilizing structure sustaining the pressure that has to be applied onto the grounding system parts to fix them to the connection section and ensure a good electrical contact, without being substantially deformed. Thus, the use of the stabilization structure avoids a plastic deformation of the cable insulation as well as the influence of any such damage on the contact pressure of the grounding contact, thereby also helping to maintain a stable contact.

Clamping means, such as one or more hose clamps, may be used to fix the grounding system components to the connection section, for e.g. over an earth braid strap. The clamping means help to develop the clamp load and/or contact pressure continuously and adapt its intensity to the specific situation and installation requirements. Moreover, since the presence of the stabilizing structure protects the cable insulation from being deformed by the radial pressure applied by the clamping means, the clamping pressure may be increased as needed to improve the electrical contact between the metal screen and the grounding systems parts, without the risk of damaging the screened cable.

In addition, the grounding system may include one or more metal contact plates to make contact with the earth braid, for e.g. using a metal mesh and/or hose clamps, and ensure a stable contact pressure between all components of the grounding system and the metal screen of screened cable.

According to the present invention, it is provided a grounding system for grounding a metal layer screened cable, the screened cable having an inner conductive core and a metal layer screen disposed around an insulation sleeve of the inner conductive core, the grounding system comprising: a stabilizing structure adapted to be directly mounted on and around an outer surface of the insulation sleeve to separate said insulation sleeve from an inner surface of the metal layer screen along a connection section of the screened cable.

In a further development, the grounding system further comprises clamping means adapted to clamp an end portion of an earth braid strap to the connection section of the screened cable and to apply radial pressure onto said end portion of the earth braid strap to fix the earth braid strap relative to the stabilizing structure mounted at the connection section; wherein said stabilizing structure is adapted to sustain the radial pressure exerted by the clamping means without substantial deformation

In a further development, the stabilizing structure includes one or more stabilizing tubular elements having an inner diameter adjustable to an outer diameter of the insulation sleeve, each of the one or more stabilizing tubular elements is adapted to be directly mounted in a concentric manner around the insulation sleeve and disposed adjacent to each other along a longitudinal length of said connection section; and/or wherein each of the one or more stabilizing tubular elements is made of one of metal, glass fiber and carbon, or a combination of any two thereof; and/or wherein the clamping means includes one or more hose clamps.

In a further development, each stabilizing tubular element is a solid ring cut from a metal pipe having an inner diameter that matches an outer diameter of the cable insulation; and/or each stabilizing tubular element is made of a sheet rolled into a cylindrical shape with two free longitudinal edges which are adapted to overlap each other over an adjustable overlapping region to form a tubular element with an adjustable inner diameter.

In a further development, each rolled sheet is provided with a plurality of through-holes disposed at least on the overlapping region and with one or more tongues that protrude from an outer surface of the rolled sheet outwards, and the one or more tongues are adapted to clamp onto the through-holes at respective positions for closing the tubular element with a fixed inner diameter.

In a further development, the grounding system further comprises: one or more contact plates adapted to be wrapped around the metal layer screen and to be disposed along a longitudinal length of the connection area, wherein each of one or more contact plates has a width adapted to cover at least 90% of a perimeter of an exposed section of the metal layer screen that covers the stabilizing structure at the connection section; and/or wherein each of the one or more contact plates has a surface textured with a pattern of perforations and peaks, the peaks protruding from a side of the contact plate to be in direct contact with the metal layer screen; and/or each of the one or more contact plates is made of tinned copper.

In a further development, the grounding system further comprises: one or more electrically conductive bands adapted to be tightly wrapped around the one or more contact plates disposed along the longitudinal length of the connection section to press the one or more contact plates against the metal layer screen; and/or wherein each electrically conductive band is made of a tinned copper mesh.

In a further development, the grounding system further comprises: the earth braid strap adapted to connect the metal layer screen to earth or to a ground reference, wherein the earth braid strap is adapted to be disposed along the connection section and/or wrapped around the one or more electrically conductive bands or the one or more contact plates; and/or further comprises an additional electrically conductive band is provided to cover the end portion of the earth braid strap at the connection section.

The present invention also provides a metal layer screened cable, comprising: an inner conductive core adapted to transport electrical current; an insulation sleeve disposed around the inner conductive core; a metal layer screen disposed around the insulation sleeve; and a grounding system according to the present invention.

In a further development, said connection section is at an end of the screened cable or at an intermediate region thereof; and/or the metal layer screen includes a metal layer and a polymer outer sheath bonded to the metal layer, the polymer outer sheath being removed from the metal layer screen at an exposed section of the metal layer screen under which the stabilizing structure is to be mounted; and/or an exposed section of the metal layer screen at said connection section is divided into a number of longitudinal segments, each longitudinal segment being adapted to be lifted from an initial orientation for uncovering a region of the insulation sleeve where the stabilizing structure is to be mounted, and to be bent towards the initial orientation to cover the stabilizing structure mounted in the uncovered region of the insulation sleeve; and/or wherein the metal layer screen is an aluminium laminated sheath.

The present invention also provides a method of grounding a screened cable having an inner conductive core and a metal layer screen disposed around an insulation sleeve of the conductive core, the method comprising: providing a stabilizing structure adapted to be directly mounted on and around an outer surface of the insulation sleeve to separate the insulation sleeve from an inner surface the metal layer screen along a connection section of the screened cable; creating an exposed section of the metal layer screen along a longitudinal length of the connection section; lifting a portion of the exposed section of the metal layer screen to uncover a region of the insulation sleeve; mounting the stabilizing structure directly on the uncovered region of the insulation sleeve; and covering the stabilizing structure and the uncovered region of the insulation sleeve with the lifted portion of the metal layer screen.

In a further development, the stabilizing structure includes one or more stabilizing elements having an inner diameter adjustable to an outer diameter of the insulation sleeve, wherein each of the one or more stabilizing tubular elements is directly mounted in a concentric manner around the uncovered region of the insulation sleeve and disposed adjacent to each other along a longitudinal length of said connection section; and/or each of the one or more stabilizing tubular elements is made of one of metal, glass fiber and carbon, or a combination of any two thereof.

In a further development, each stabilizing tubular element is made of a sheet rolled into a cylindrical shape with two free longitudinal edges which are adapted to overlap each other over an adjustable overlapping region to form a tubular element with an adjustable inner diameter, wherein mounting the stabilizing structure onto the uncovered region of the insulation sleeve includes wrapping each rolled sheet directly around the uncovered region of the insulation sleeve and adjusting the respective overlapping region so that the inner diameter of the tubular element substantially corresponds to the outer diameter of the insulation sleeve.

In a further development, the method further comprises: making a number of longitudinal through-cuts on the exposed section of the metal layer screen to create a number of longitudinal segments on the portion of the metal layer screen to be lifted; and lifting the respective longitudinal segments from an initial orientation to uncover said region of the insulation sleeve; wherein the stabilizing structure and the uncovered region of insulation sleeve are covered with the lifted portion of the metal layer screen by bending the longitudinal segments back to the initial orientation.

In a further development, the method further comprises: installing a number of contact plates directly over the exposed section of the metal layer screen that covers the stabilizing structure and disposed along the longitudinal length of connection section; wherein each of said contact plates covers at least 90% of a perimeter of said exposed section of the metal layer screen that covers the stabilizing structure; and/or wrapping one or more electrically conductive bands around the one or more contact plates along the connection section.

In a further development, the method further comprises: disposing an end portion of an earth braid strap over the one or more electrically conductive bands at the connection section; and wrapping the end portion of the earth braid strap around the one or more electrically conductive bands at the connection section.

In a further development, the method further comprises: fixing the end portion of the earth braid strap to the connection section of the screened cable using clamping means, wherein said stabilizing structure is adapted to sustain the radial pressure exerted by the clamping means without substantial deformation; and/or covering the end portion of the earth braid strap and/or the clamping means with an additional electrically conductive band.

The accompanying drawings are incorporated into and form a part of the specification for the purpose of explaining the principles of the invention. The drawings are not to be construed as limiting the invention to only the illustrated and described examples of how the invention can be made and used.

### BRIEF DESCRIPTION OF THE FIGURES

Further features and advantages will become apparent from the following and more detailed description of the invention as illustrated in the accompanying drawings, in which:
**Fig. 1** depicts schematically a longitudinal cross-section of a metal layer screened cable with a conventional grounding system;
**Fig. 2** is a graphic representation of an exemplary variation of contact resistance as a function of a number of heating cycles for a conventional metal layered screened cable with the grounding design of Fig. 1;
**Fig. 3** depicts schematically a longitudinal cross-section of a metal layer screened cable with a grounding system according to the present invention;
**Fig. 4** shows an exemplary stabilizing tubular element used in the grounding system according to the present invention;
**Fig. 5** shows an exemplary contact plate used in the grounding system according to the present invention;
**Fig. 6** is a graphic representation of an exemplary variation of contact resistance as a function of the number of heating cycles for the metal layer screened cable with a grounding system as illustrated in Fig. 3; and
**Figs. 7A to 7H** illustrate steps of a method of grounding a metal layer screened cable according to the present invention.

### DETAILED DESCRIPTION OF THE INVENTION

The present invention will now be more fully described hereinafter with reference to the accompanying drawings, in which exemplary embodiments of the invention are shown. The present invention may, however, be embodied in many different forms and should not be construed as limited to the embodiments set forth herein. Rather, these embodiments are provided so that the disclosure will be thorough and complete, and will fully convey the scope of the invention to those skilled in the art. Like numbers refer to like elements throughout.

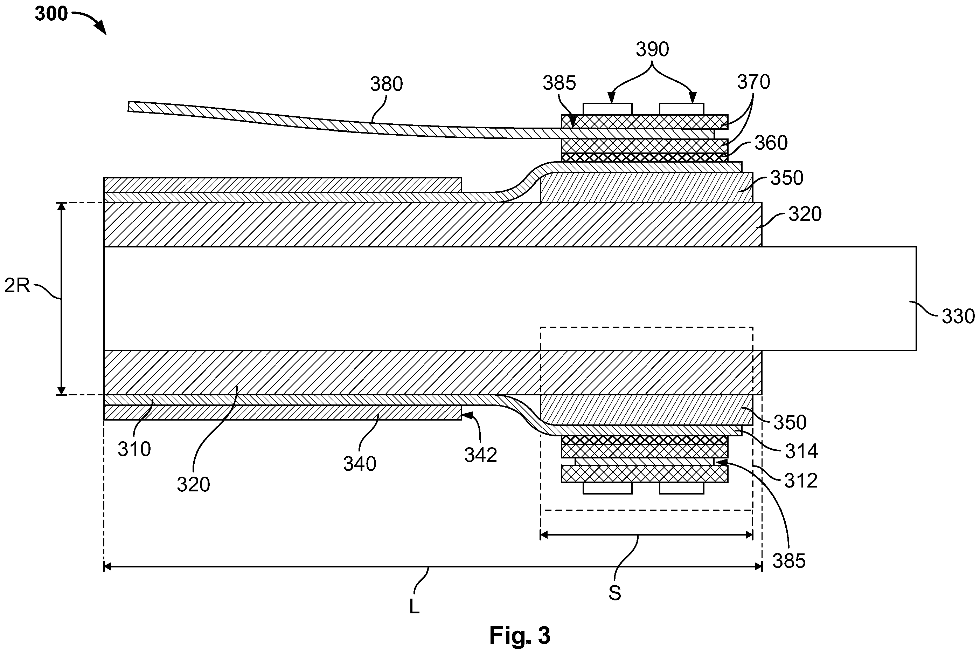

Fig. 3 depicts schematically a cross-sectional view of a metal layer screened cable 300 with a grounding system according to principles of the present invention. Similarly to the conventional screened cable 100 illustrated in Fig. 1, the screened cable 300 includes a metal layer screen 310, hereinafter simply referred to as a metal screen 310, which extends along a longitudinal length L and disposed between a polymer insulation 320 of a conductive core 330 and an outer sheath 340 of the screened cable 300. For instance, the metal screen 310 may be an aluminum laminated sheath. A portion of the outer sheath 340 of the screened cable 300 is removed from at least one of the cable ends, thereby exposing a connection portion 312 of the underlying metal screen 310 to which the grounding system is attached.

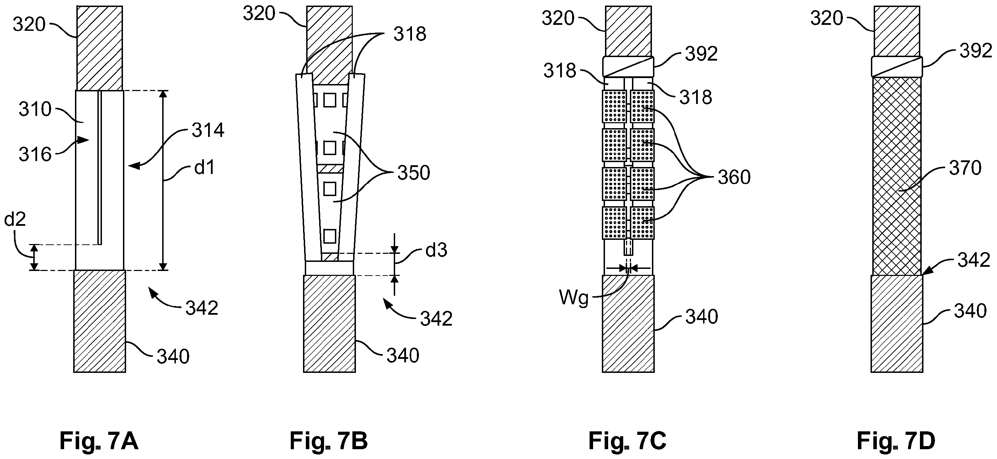

As shown in Fig. 3, the grounding system includes a stabilizing structure 350, which is directly mounted onto an outer side of the cable insulation 320 (which is the insulation sleeve 320 of the cable conductive core 330), and beneath the metal screen 310 to separate an inner side of the metal screen 310, which is the side of the metal screen facing the outer side of the cable insulation 320, from the cable insulation 320 along a longitudinal length s of a connection section 312 to which other components of the grounding system will be attached. Thus, with the present grounding system the metal screen 310 is no longer in direct contact with the cable insulation 320 at the connection section 312. The stabilizing structure 350 may be made of one or more stabilizing tubular elements, for e.g. rings, adapted to be mounted along the longitudinal length s of the connection section 312. Each stabilizing ring 350 is disposed around the insulation sleeve 320 in a concentric manner and has an inner diameter corresponding to a diameter 2R of the insulation sleeve 320 of outer radius R. In the example illustrated in Fig. 3 the stabilizing structure 350 has a single stabilizer ring. However, the number of stabilizing rings to be mounted on the connection section 312 may be more than one, for e.g. two such as illustrated in Fig. 7B.

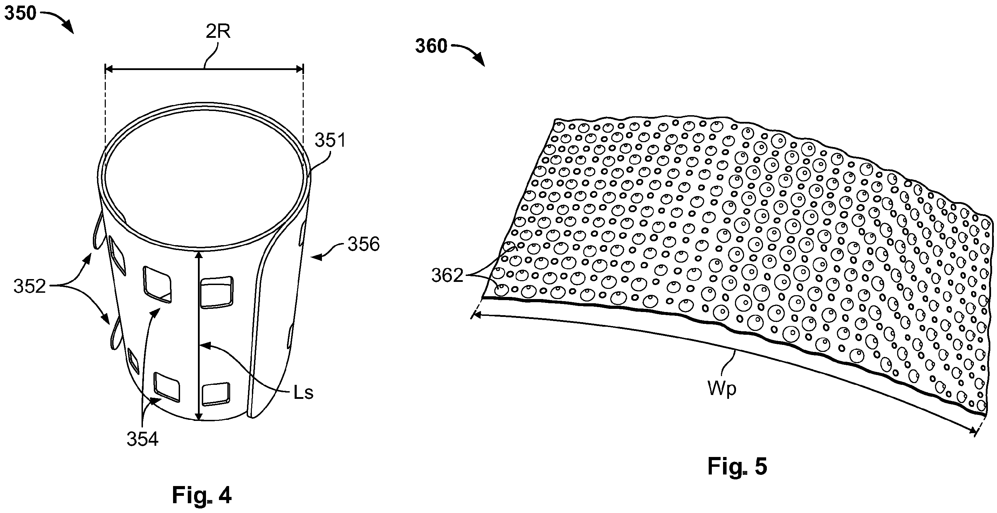

Fig. 4 shows an example of a stabilizing tubular element 350, called hereinafter as stabilizing ring 350, used in the grounding system according to the principles of the present invention.

As shown in Fig. 4, the stabilizing ring 350 may be made of a sheet 351, which can be rolled into a cylindrical shape. The rolled sheet 351 has two free longitudinal edges which overlap upon the rolled sheet 351 and move towards each other over an adjustable overlapping region. The amount of overlapping is adjustable, thus allowing the diameter of the rolled sheet 351 to be adjusted. As a result, the stabilizing ring 350 formed from the rolled sheet 351 has an inner diameter that can be easily adjusted to the outer diameter (2R) of the insulation sleeve 320. The sheet 351 may be made of a metal, for e.g. a tinned aluminum plate. Alternatively, the stabilizing tubular elements may be made of materials other than a metal, such as glass fiber and carbon, or a combination of any of these or other materials capable of providing a stabilizing tubular element with sufficient rigidity to withstand an outer radial pressure exerted to fix the grounding system components to the connection section 312 of the screened cable 300.

The rolled sheet 351 is mounted on the cable insulation 320 by being fully wrapped around a perimeter of a cross-section of the cable insulation 320, transversal to the longitudinal direction L, to form the closed, cylindrical (or ring) shape. As shown in Fig. 4, the rolled sheet 351 may be cut with a width that is larger than (or at least equal to) the outer perimeter (2πR) of the cable insulation cross-section so that the closed ring 350 has an inner diameter that can be easily adjusted to the outer perimeter (2πR) of the insulation sleeve 320. Thus, the rolled sheet design has the advantage of providing a stabilizing ring 350 with an adjustable, inner diameter that can be easily fitted to the outer diameter (2R) of the cable insulation 320, and therefore, facilitates on-site installation of the stabilizing structure 350. In addition, in order to close the mounted rolled sheet 351 with an inner diameter corresponding to the outer diameter 2R of the cable insulation 320, the rolled sheet 351 may be provided with a number of clamps or tongues 352, for e.g. which are cut on the rolled sheet 351 itself and bent away from the rolled sheet surface, for clamping onto respective through-holes 354 distributed along the width of the rolled sheet 351, or at least on the overlapping region of the freed edges, thereby fixing the diameter of the stabilizing ring 350 as shown in Fig. 4 .

Thus, the design of the stabilizing ring 350 as a rolled sheet has several advantages. For instance, due to the open, overlapping configuration of its free edges, the stabilizing ring 350 can be easily mounted around the transversal cross-section of the cable insulation 320 and easily adjusted to its outer diameter for a large range of diameters of the cable insulation 320. Moreover, the structure of tongues 352 and through-holes 354 provided on the surface of the rolled sheet 351 allows to fix the stabilizing ring 350 to the cable insulation 320 by mechanical means, without the need of additional adhesives or glues. In addition, the stabilizing ring 350 in the form of a rolled sheet 351 may be easily installed at a connection section 312 located at an end of the screened cable 300 as well as at an intermediate region thereof.

The stabilizing structure 350 may include more than one stabilizing rings with the open, rolled sheet design described above. However, stabilizing rings in the form of closed, rigid rings with a fixed inner diameter 2R for separating the metal screen 310 from the insulation sleeve 320 may also be used, alone or in combination with the rolled sheets. For instance, in an alternative embodiment, the stabilizing structure may include one or more stabilizing tubular elements made as solid rings which are cut from a metal pipe having an inner diameter that matches an outer diameter of the cable insulation 320. The stabilizing tubular elements, either in the form of stabilizing rings 350 or of solid rings, may be made of metal or any other material sufficiently rigid to sustain the radial pressure exerted by the fixation of the grounding system components to the connection section 312.

In order to improve the electrical connection of the metal screen 310 to ground, the grounding system may also include a number of metallic contact plates 360, which are directly mounted onto the metal screen 310, more specifically, on the outer side of the metal screen 310 along the connection section 312.

In the configuration illustrated in Fig. 3, a single contact plate 360 is shown for simplicity reasons. However, the number of contact plates 360 to be used is not limited to one. For instance, a plurality of contact plates 360 may be used and disposed arranged side by side along the length s of the connection section 312 of the metal screen 310, as in the example illustrated in Fig. 7C.

An example of a contact plate 360 according to the principles of the present invention is shown in Fig. 5. The contact plate 360 is made of an electrically conductive material, such as a tinned cooper or the like, and sufficiently thin so as to be easily folded around the perimeter of the metal screen 310 at the connection section 312, i.e. around the portion of metal screen 310 covering the stabilizing ring 350, thereby facilitating an on-site installation. The contact plate 360 is preferentially cut with a width Wp suitable to cover entirely or at least a significant portion of outer perimeter of the portion of metal screen 310 covering the stabilizing structure 350 at the connecting section 312. In addition, as shown in Fig. 5 the contact plate 360 may be provided with a textured surface, for e.g. with a periodic pattern of perforations 362. These peroration may have peaks that protrude from the side the contact plate 360 that will be in direct contact with the metal screen 310. This perforated patterned surface facilitates the dissipation of heat from the metal screen 310 and adds a degree friction that helps to reduce a relative displacement between the metal screen 310 and the contact plate 360.

The grounding system may further include one or more fixations bands 370 which are tightly wrapped around the contact plate(s) 360, along the connection section 312, so as to keep the contact plate(s) 360 in place. The fixation band 370 is preferably made of an electrically conductive material so as to establish good electrical contact among the contact plates 360 and between the contact plates 360. For instance, the fixation band 370 may be a metallic mesh, such as a tinned copper mesh, which can be easily wrapped around the contact plates 360 on-site and therefore, adjust to the variations in diameter at the region of the connection section 312 caused by the overlapping of the contact plate 360 over the metal screen 310.

The connection of the metal screen 310 to ground may be made via an earth braid strap 380. For this purpose, an end portion 382 of the earth braid strap 380 may be directly disposed onto one of the fixation bands 370, which is wrapped over the one or more contact plates 360 at the connecting section 312. The end portion 382 of the earth strap 380 may itself be tightly wrapped around the fixation band 370 to increase the area of electrical contact with the underlying fixation band 370 and improve mechanical stability of the ensemble. As shown in Fig. 3, an additional fixation band 370 may be installed around the end portion 382 of the earth strap 380 in order to fixate the earth braid 380 in place, improve the electrical contact with the underlying contact plate(s) 360 and to contact stability of the whole assembly.

Finally, the ensemble of the grounding system components, i.e. the fixations bands 370, the earth braid strap 380, the contact plate(s) 360, and the stabilizing ring(s) 350 may be tightly fixed to the connection section 312 of the screened cable 300 by clamping means, for e.g. one or more hose clamps 390 or the like, distributed along the longitudinal length of the connection section 312.

An exemplary method of installing a grounding system according to the principles of the present invention will be now described with reference to Figs. 7A to 7H.

Fig. 7A shows the screened cable 300 illustrated in Fig. 3, prior to the installation of the grounding system components. In order to install the stabilizing structure 350 around the cable insulation 320, a portion of the cable outer sheath 340 is removed to expose the underlying metal screen 310. The metal layer screen 310 often includes a metal layer and a polymer outer sheath (not shown) bonded together. This polymer outer sheath is then preferably removed from the metal screen 310 at the exposed section 312 under which the stabilizing structure 350 is to be mounted to avoid problems associated with a plastic deformation of the polymer outer sheath under radial pressure and improve the electrical contact with the grounding system. A radial cut is then made on the metal layer of the exposed metal screen 310, at a distance d1 measured from the cut border 342 of the cable outer sheath 340 to remove an end part of the metal screen 310, thereby creating an exposed section 314 of the metal screen 310 with a longitudinal length d1. A portion of this exposed section 314 is then divided into a number of longitudinal segments 318 by making longitudinal though-cuts 316 from the cut end of the metal screen 310 towards the cut border 342 of the cable outer sheath 340. Preferably, the longitudinal through-cuts 316 are not made over the whole longitudinal length d1 of the exposed section 314 but rather stopped at a certain distance d2 from the border 342 of the cable outer sheath 340, which provides more control and stability when lifting the metal screen segments 318. The number of longitudinal through-cuts 316 may be four and/or equally spaced around the perimeter of the exposed section 314 of the metal screen 310, thereby making an equal number of longitudinal segments 318 of a same width and length. However, the number of longitudinal through-cuts 316 is not limited to four. Namely, a single longitudinal through-cut of the exposed section 314 might be used.

The cutting operations mentioned above may be performed using a Ripley US 15 tool or the like. In addition, the radial and longitudinal cuts may be made with distances d1 = 150 mm and d2 = 18 mm for screened cables having a cross section of 400 mm² or up to 1200 mm².

The so-prepared longitudinal segments 318 of the exposed metal screen 310 may then be easily lifted from the initial orientation shown in Fig. 7A so as to uncover the underlying cable insulation 320, as shown in Fig. 7B. For instance, the longitudinal through-cuts 316 are carefully opened and the metal screen segments 318 bended outwards from the cable insulation 320 by a suitable angle (for e.g. by a maximum angle of 45°) sufficient to uncover a portion of the cable insulation 320 underneath the metal screen section 314 and provide space for installing the stabilizing structure 350 directly onto an the exposed portion of the cable insulation 320.

As mentioned above, the stabilizing structure 350 may include more than one stabilizing tubular elements 350, for e.g. two rings as illustrated in Fig. 7B, that are installed in a concentric manner around the uncovered portion of the cable insulation 320 and adjacent to each other in the cable longitudinal direction. The stabilizing rings 350 may be each provided with the rolled sheet design described above with reference to Fig. 4. Thus, each stabilizing ring 350 can be easily installed by wrapping the respective rolled sheet 351 around the outer perimeter of the cable insulation 320, partially overlapping the rolled sheet free edges, to form a closed ring shape with an inner diameter which is only slightly larger than the outer diameter of the cable insulation 320. Although not shown in the figures, the cable insulation 320 may include a polymer insulation (for e.g. a PE polymer sleeve) with a respective protection layer, such as a paper protection. In such a case, it is to be understood that the stabilizing rings 350 may be directly mounted onto the protection layer of the cable insulation 320. The metal screen segments 318 are then bent back to their initial orientation to cover the stabilizing rings 350 and underlying cable insulation 320. For instance, a hammer may be used to knock the metal screen segments 318 back into position. As shown in Fig. 7B, the stabilizing ring 350 closer to the border 342 of the cable outer sheath 314 is placed at a distance d3 from the border 342 of the cable outer sheath 340 to avoid breakage of the metal screen segments 318. A number of layers of cotton tape 392 may be rolled at the end sections of the metal screen segments 318 that touch the cable insulation 320 (i.e. the polymer insulation or its protection layer if present) to fix the metal screen segments 318 in place.

As shown in Fig. 7C, one or more contact plates 360 are then installed onto the metal screen segments 318 by wrapping each contact plate 360 around the perimeter of the closed metal screen segments 318. Although the illustrated configuration includes fours contact plates 360, the number of contact plates 360 installed over the metal screen segments 318 is not limited to four and a larger or less number of contact plates 360 may be used. Each contact plate 360 has a width Wp which is preferably selected such that it does not cover the entire perimeter of the bent metal screen segments 318 (i.e. correspondent to the diameter of the cross-section of the connection section 312 including the metal screen segments 318 closed over the stabilizing rings 350) but rather leaves a gap of a short width Wg between the opposed edges of each contact plate 360. This short gap avoids an overlapping between the opposed edges of the contact plate 360 that might otherwise occur due to the radial pressure used to fixate the grounding system components to the connection section 312. For instance, a gap width of 5 mm may be used, which corresponds to a coverage of more than 90% of the perimeter of connection section 312 for a screened cable 300 with a circular cross-section of 400 mm² (i.e. a radius of about 11 mm). The contact plates 360 may be fixed in place over the metal screen segments 318 using one or more fixation bands 370 wrapped around the contact plates 360. For instance, three layers of copper mesh may be used, which are wrapped starting and ending at the border 342 of the cable over sheath 340 (see Fig. 7D).

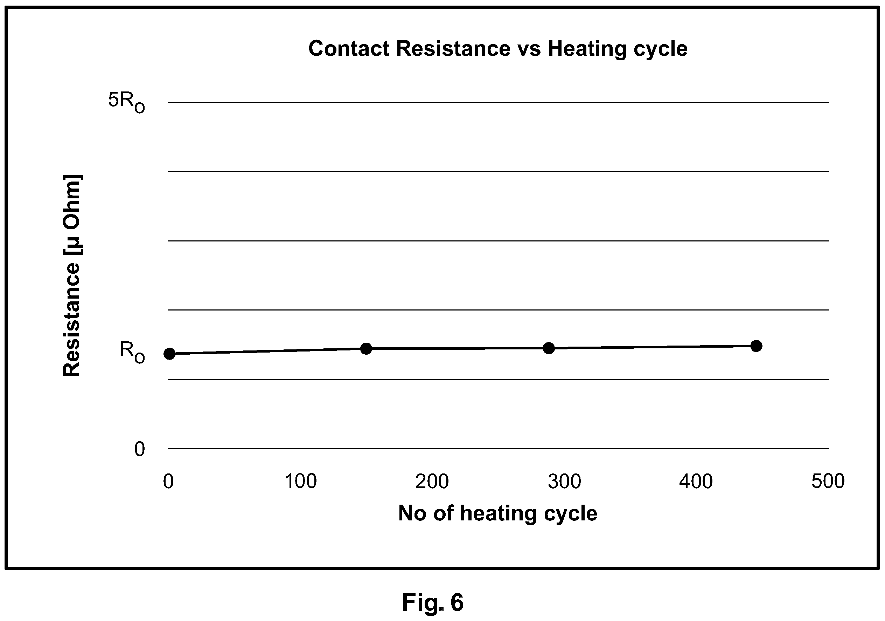

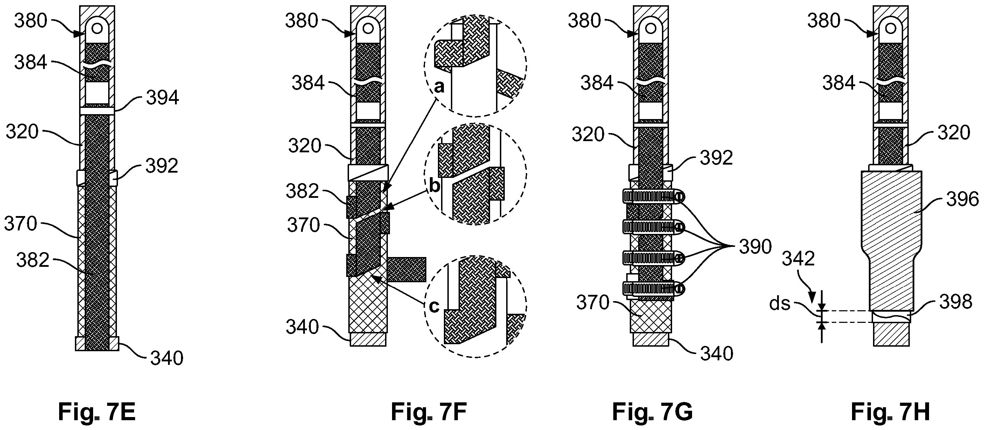

An earth braid strap 380, to be used for electrically connecting the metal screen 310 to ground, may then be placed with one end side 382 over one of the fixation bands 370 in the connection section 312, as shown in Fig. 7E. The other, open end side 384 of the earth braid strap 380 may be temporally fixed to an exposed part of the cable insulation 320, for e.g. with a PVC tape 394. The use of a metal mesh, as the fixation band 370, between the contact plates 360 and the end portion 382 of the earth braid 380 has several advantages over the direct contact between the contact plate 160 and the earth braid 170 in the conventional screened cable 100 described above with reference to Fig. 3. Firstly, since the metal mesh 370 is tightly wrapped around the contact plates 360 over the whole longitudinal length and perimeter of the connection section 312, it is possible to apply a continuous radial pressure onto the contact plates 360, against the metal screen segments 318 and the stabilizing ring 350, over the whole longitudinal length of the connection section 312. As a result, the physical and electrical contact among these components is improved with respect to the conventional design. Secondly, it allows to minimize the relative displacements between the metal screen segments 318 and the contact plates 360 caused by differences in the thermal expansion of the metallic parts and the cable polymer insulation under repeated heating cycles, and therefore, prevent significant changes of the contact resistance with the increased number of heating cycles as illustrated in Fig. 6. Moreover, the metal mesh 370 disposed between the contact plates 360 and the earth braid 380 also prevents relative displacements between these components and improves the electrical contact between them.

The end portion 382 of the earth braid strap 380 that is in direct contact with the fixation band 370 in the connection section 312 may be wrapped around the fixation band 370, for e.g. such as exemplified in Fig. 7F. As a result, the electrical contact between the earth braid 380 and the contact plates 360 as well as the contact stability may be improved.

As shown in Fig. 7G, the portion 382 of the earth braid strap 380 laid over the fixation band 370 may then be fixed in place using clamping means, such as a set of hose clamps 390. The clamping means 390 allows to apply a radial pressure onto the end portion 382 of the earth braid strap 380 as well as onto the underlying grounding system parts against the underlying stabilizing structure 350 and that can be easily adjusted to fix these components in place and improve electrical contact.

Although not shown in Fig. 7G, an additional fixation band 370, for e.g. a metal mesh, may be wrapped over the wrapped portion 382 of the earth braid strap 380 and below the hose clamps 390, such as shown in Fig. 3. This outer fixation band 370 improves the physical and electrical contact of the wrapped portion 382 of the earth strap 380 with the inner fixation band(s) 370 and contact plates 360 disposed underneath.

The connection section 312 may then be covered with a protective tape 392 (for e.g. a cotton tape) to protect the fixed hose clamps 390 and the fixation bands 370 (see Fig. 7H), whereby the open side 384 of the earth braid 380 is left uncovered for making the connection to earth or the ground reference. Sealing means 398 may be placed around the cable outer sheath 340, for e.g. over a longitudinal length ds from the outer sheath border 342, to prevent the entry of liquids or air through any gaps at the border 342 of the cable outer sheath 340 or the protective tape 392. For instance, two layers of red sealing mastic may be used as the sealing means 398.

In conclusion, the present invention provides a grounding system and a grounding method for metal layer screened cables which results in a more stable grounding contact and prevents the occurrence of relative movements between the metal parts of the grounding system by making use of a stabilizing structure which allows to separate the cable metal screen from the cable insulation. This stabilization structure also prevents a plastic deformation of the cable polymer insulation, which could otherwise occur due to the radial pressure applied onto the grounding system parts and against the cable core to keep them in place, thereby helping to maintain a stable contact and to avoid cable damage. Thus, the contact resistance should no longer increase with the number of heating cycles to which the grounded screened cable will be exposed and consequently, damage of the metal screen or the grounding system parts due to overheating may be reduced. Moreover, the component parts of the grounding systems according to the present invention may be fixed to the screened cable entirely by mechanical means, i.e. without the need of any adhesive or glues. As a result, the grounding system may be easily connected to the metal layer screened cable at the installation site and/or disconnected therefrom, for e.g. for maintenance or replacement purposes. For instance, clamping means may be used to secure all the grounding components in place. Thus, it is possible to develop the clamp load and/or contact pressure continuously and adapt its intensity to the specific situation and installation requirements.

Finally, although the present invention has been described above with reference to metal layer screened cables, the principles of the present invention may also be advantageously applied to ground screened cables having other types of screen, such as screens made from metal wires, a metallic tape or a conductive polymer foil.

### Reference Signs

- 100: conventional screened cable
- 110: metal screen
- L: longitudinal length
- 120: polymer insulation
- 130: conductive core
- 140: cable over-sheath
- 150: Earth braid strap
- 160: Cooper contact plate
- 170: metal strips

- 300: screened cable
- 310: metal screen
- L: longitudinal length
- 312: connection section of metal screen
- 314: exposed section of metal screen
- 316: longitudinal cut in metal screen
- 318: longitudinal segments of metal screen
- s: longitudinal length of connection section
- 320: cable insulation sleeve
- R: outer radius of the cable insulation sleeve
- 330: cable conductive core
- 340: cable over sheath
- 342: border of cable over sheath
- 350: stabilizing ring
- 351: rolled sheet
- 352: clamps of stabilizing ring
- 354: through-holes of stabilizing ring
- 356: outer surface of stabilizing ring
- 360: contact plate
- 362: perforations of contact plate
- Wp: width of contact plate
- 370: fixation bands (cooper mesh)
- 380: earth braid strap
- 382: wrapped, end portion of earth braid strap
- 384: open side of earth braid strap
- 390: clamping means (hose clamps)
- 392: cotton tape
- 394: PVC tape
- 396: cotton tape
- 398: sealing means (e.g. red sealing mastic)
- Wg: width of the gap between opposed edges of the folded contact plate

## Claims

1. Grounding system for grounding a metal layer screened cable (300), the screened cable (300) having an inner conductive core (330) and a metal layer screen (310) disposed around an insulation sleeve (320) of the inner conductive core (330), the grounding system comprising:
a stabilizing structure (350) adapted to be directly mounted on and around an outer surface of the insulation sleeve (320) to separate said insulation sleeve (320) from an inner surface of the metal layer screen (310) along a connection section (312) of the screened cable (300).

2. Grounding system according to claim 1, further comprising:
clamping means (390) adapted to clamp an end portion (382) of an earth braid strap (380) to the connection section (312) of the screened cable (300) and to apply radial pressure onto said end portion (382) of the earth braid strap (380) to fix the earth braid strap (380) relative to the stabilizing structure (350) mounted at the connection section (312);
wherein said stabilizing structure (350) is adapted to sustain the radial pressure exerted by the clamping means (390) without substantial deformation.

3. Grounding system according to claim 1 or 2, wherein
the stabilizing structure (350) includes one or more stabilizing tubular elements (350) having an inner diameter adjustable to an outer diameter of the insulation sleeve (320),
each of the one or more stabilizing tubular elements (350) is adapted to be directly mounted in a concentric manner around the insulation sleeve (320) and disposed adjacent to each other along a longitudinal length of said connection section (312); and/or
wherein each of the one or more stabilizing tubular elements (350) is made of one of metal, glass fiber and carbon, or a combination of any two thereof; and/or
wherein the clamping means (390) includes one or more hose clamps (390).

4. Grounding system according to claim 3, wherein
each stabilizing tubular element (350) is a solid ring cut from a metal pipe having an inner diameter that matches an outer diameter of the cable insulation (320); and/or
each stabilizing tubular element (350) is made of a sheet (351) rolled into a cylindrical shape with two free longitudinal edges which are adapted to overlap each other over an adjustable overlapping region to form a tubular element (350) with an adjustable inner diameter.

5. Grounding system according to claim 4, wherein
each rolled sheet (351) is provided with a plurality of through-holes (354) disposed at least on the overlapping region and with one or more tongues (352) that protrude from an outer surface (356) of the rolled sheet (351) outwards, and
the one or more tongues (352) are adapted to clamp onto the through-holes (354) at respective positions for closing the tubular element (350) with a fixed inner diameter.

6. Grounding system according to any one of claims 1 to 5, further comprising:
one or more contact plates (360) adapted to be wrapped around the metal layer screen (310) and to be disposed along a longitudinal length of the connection area (312),
wherein each of one or more contact plates (360) has a width adapted to cover at least 90% of a perimeter of an exposed section of the metal layer screen (310) that covers the stabilizing structure (350) at the connection section (312), and/or
wherein each of the one or more contact plates (360) has a surface textured with a pattern of perforations (362) and peaks, the peaks protruding from a side of the contact plate (360) to be in direct contact with the metal layer screen (310); and/or
wherein each of the one or more contact plates (360) is made of tinned copper.

7. Grounding system according to claim 6, further comprising:
one or more electrically conductive bands (370) adapted to be tightly wrapped around the one or more contact plates (360) disposed along the longitudinal length of the connection section (312) to press the one or more contact plates (360) against the metal layer screen (310); and/or
wherein each electrically conductive band (370) is made of a tinned copper mesh.

8. Grounding system according to any one of claims 1 to 7, further comprising:
the earth braid strap (380) adapted to connect the metal layer screen (310) to earth or to a ground reference,
wherein the end portion (382) of the earth braid strap (380) is adapted to be disposed along the connection section (312) and/or wrapped around the one or more electrically conductive bands (370) or the one or more contact plates (360); and/or
further comprising an additional electrically conductive band (370) to cover the end portion (382) of the earth braid strap (380) at the connection section (312).

9. A metal layer screened cable (300), comprising:
an inner conductive core (330) adapted to transport electrical current;
an insulation sleeve (320) disposed around the inner conductive core (330);
a metal layer screen (310) disposed around the insulation sleeve (320); and
a grounding system according to any one of claims 1 to 8.

10. The metal layer screened cable (300) according to claim 9, wherein
said connection section (312) is at an end of the screened cable (300) or at an intermediate region thereof; and/or
wherein the metal layer screen (310) includes a metal layer and a polymer outer sheath bonded to the metal layer, the polymer outer sheath being removed from the metal layer screen (310) at an exposed section (312) of the metal layer screen (310) under which the stabilizing structure (350) is to be mounted; and/or
wherein an exposed section of the metal layer screen (310) at said connection section (312) is divided into a number of longitudinal segments (318),
each longitudinal segment (318) being adapted to be lifted from an initial orientation for uncovering a region of the insulation sleeve (320) where the stabilizing structure (350) is to be mounted, and to be bent towards the initial orientation to cover the stabilizing structure (350) mounted in the uncovered region of the insulation sleeve (320); and/or
wherein the metal layer screen (310) is an aluminum laminated sheath.

11. A method of grounding a screened cable (300) having an inner conductive core (330) and a metal layer screen (310) disposed around an insulation sleeve (320) of the inner conductive core (330), the method comprising:
providing a stabilizing structure (350) adapted to be directly mounted on and around an outer surface of the insulation sleeve (320) to separate the insulation sleeve (320) from an inner surface of the metal layer screen (310) along a connection section (312) of the screened cable (300);
creating an exposed section (314) of the metal layer screen (310) along a longitudinal length of the connection section (312);
lifting a portion (318) of the exposed section (314) of the metal layer screen (310) to uncover a region of the insulation sleeve (320);
mounting the stabilizing structure (350) directly on the uncovered region of the insulation sleeve (320); and
covering the stabilizing structure (350) and the uncovered region of the insulation sleeve (320) with the lifted portion of the metal layer screen (310).

12. A method according to claim 11, wherein
the stabilizing structure (350) includes one or more stabilizing tubular elements (350) having an inner diameter adjustable to an outer diameter of the insulation sleeve (320),
each of the one or more stabilizing tubular elements (350) is directly mounted in a concentric manner around the uncovered region of the insulation sleeve (320) and disposed adjacent to each other along a longitudinal length of said connection section (312); and/or
wherein each of the one or more stabilizing tubular elements (350) is made of one of metal, glass fiber and carbon, or a combination of any two thereof;.

13. A method according to claim 12, wherein
each stabilizing tubular element (350) is made of a sheet (351) rolled into a cylindrical shape with two free longitudinal edges which are adapted to overlap each other over an adjustable overlapping region to form a tubular element (350) with an adjustable inner diameter, and
wherein mounting the stabilizing structure (350) onto the uncovered region of the insulation sleeve (320) includes wrapping each rolled sheet (351) directly around the uncovered region of the insulation sleeve (320) and adjusting the respective overlapping region so that the inner diameter of the tubular element (351) substantially corresponds to the outer diameter of the insulation sleeve (320).

14. The method according to any one of claims 11 to 13, further comprising:
making a number of longitudinal through-cuts on the exposed section (314) of the metal layer screen (310) to create a number of longitudinal segments (318) on the portion of the metal layer screen (310) to be lifted; and
lifting the respective longitudinal segments (318) from an initial orientation to uncover said region of the insulation sleeve (320);
wherein the stabilizing structure (350) and the uncovered region of the insulation sleeve (320) are covered with the lifted portion of the metal layer screen (310) by bending the longitudinal segments (318) back to the initial orientation.

15. A method according to any one of claims 11 to 14, further comprising:
installing a number of contact plates (360) directly over the exposed section (314) of the metal layer screen (310) that covers the stabilizing structure (350) and disposed along the longitudinal length of connection section (312);
wherein each of said contact plates (360) covers at least 90% of a perimeter of said exposed section (314) of the metal layer screen (310) that covers the stabilizing structure (350); and/or
wrapping one or more electrically conductive bands (370) around the one or more contact plates (360) along the connection section (312).

16. A method according to claim 15, further comprising:
disposing an end portion (382) of an earth braid strap (380) over the one or more electrically conductive bands (370) at the connection section (312); and
wrapping the end portion (382) of the earth braid strap (380) around the one or more electrically conductive bands (370) at the connection section (312).

17. A method according to any one of claims 11 to 16, further comprising:
fixing an end portion (382) of the earth braid strap (380) to the connection section (312) of the screened cable (300) using clamping means (390),
wherein said stabilizing structure (350) is adapted to sustain the radial pressure exerted by the clamping means (390) without substantial deformation; and/or
covering the end portion (382) of the earth braid strap (380) and/or the clamping means (390) with an additional electrically conductive band (370).
